# EUROPEAN PATENT SPECIFICATION

(11) **EP 2 799 217 B1**
(45) Date of publication and mention of the grant of the patent: **03.06.2015**
(21) Application number: 13165919.5
(22) Date of filing: 30.04.2013
(51) Int. Cl.: B29D 29/06, F16G 5/06, B66B 7/06

(54) **A method for manufacturing a rope, a rope and an elevator**
Verfahren zur Herstellung eines Seiles, ein Seil und ein Aufzug
Procédé de fabrication d'une corde, corde et élévateur

(43) Date of publication of application: 05.11.2014
(73) Proprietor: Kone Corporation, 00330 Helsinki (FI)
(72) Inventor: Pelto-Huikko, Raimo, 00330 Helsinki (FI); Valjus, Petteri, 00330 Helsinki (FI); Alasentie, Pentti, 00330 Helsinki (FI)
(74) Representative: Kolster Oy Ab

(56) References cited:
- EP-A1- 1 886 794
- EP-A1- 1 886 796
- EP-A1- 2 305 591
- DE-A1-102004 030 722
- DE-A1-102005 044 988
- DE-U1- 9 218 731
- US-A- 4 395 298
- US-A- 5 129 866
- US-A1- 2004 206 579

## Description

### Field of the invention

The invention relates to a method for manufacturing a rope and a rope manufactured with the method. The rope is in particular a rope of an elevator meant for transporting passengers and/or goods.

### Background of the invention

Elevators typically have suspension ropes for suspending the elevator car and the counterweight. The suspension roping passes around a sheave located above the car and counterweight suspending the car and counterweight on opposite sides of the sheave. In addition to suspension function, these ropes are often used for transmitting moving force to the car and counterweight from a motor driving a sheave around which the ropes pass. In addition to said suspension ropes, elevators often also comprise a roping passing around a sheave located below the elevator car and counterweight. This roping is provided either as a compensation roping for compensating the imbalance in the suspension roping or as a lock-down -roping for keeping the car from jumping if the counterweight suddenly stops (or vice versa). All, these functions require good force-transmission ability from the ropes, because they must be able to bear a heavy load. For enabling good load-bearing, each of the ropes comprises one or more load bearing members elongated in the longitudinal direction of the rope. The load bearing members of the ropes together bear without breaking the load exerted on them in their longitudinal direction, e.g. the weight of the car. In addition to the load bearing members, each rope may comprise a surface part which is non-bearing in longitudinal direction of the rope. The surface part is typically in the form of an elastomeric coating. It provides protection for the load bearing members and forms the outermost surface for the rope. The surface part can be formed to have an optimal friction by adjusting its material properties or by selecting a contoured shape for enhancing engagement between a driving member, such as a drive sheave, and the rope. The shape may be a for example grooved (longitudinal grooves, e.g. polyvee) or toothed.

Normally, the load bearing members are metallic (twisted from steel wires) and substantially round in their cross section. Prior art knows for example belt-like ropes, which have a plurality of load bearing members in the form of metallic cords, which are coated with elastomer, such as rubber. This kind of a rope is presented for instance in international patent application WO03043927 A2. The prior art also knows also ropes where the load bearing members are non-metallic and have a wide cross section. Also with these ropes, the load bearing members may be coated with elastomer. This kind of a rope is presented for instance in international patent application WO2009090299 A1. In this particular solution, the load-bearing parts are made of composite material with reinforcing fibers in polymer matrix. In ropes having a non-bearing surface part and one or more load-bearing parts, their mutual engagement is important. In particular, the bond between the load bearing members and the surface part needs to be firm. Adhesion between the parts is particularly important if the load-bearing part has a smooth surface and/or the load-bearing members are wide, because this means that mechanical interlocking between the parts is likely to be low. Also, this kind of load-bearing members don't have a large surface area compared to cross-section area and the bond of the surface part and the load bearing member may become critical. The risk is that the surface part breaks off the load bearing members.

In the known processes for manufacturing a rope with integral surface part and load bearing members, the surface part has been formed by molding it in a melted state on pre-manufactured load bearing members and subsequently letting the surface part material solidify and adhere on the load bearing members. A problem with this method has been that the components are difficult to position accurately relative to each other. When the rope is formed to have multiple load bearing members, their position relative to each other, as well as relative to the surface part, has been difficult to control accurately. For instance, it has been difficult to position them accurately on the same plane and adjacently at an accurate distance from each other. The process has also been slow and difficult, because of difficulties of moving melted material. It has also been difficult to mold the surface part to have any desired shape with a high process speed, because a shape, which is non-continuous in longitudinal direction of the rope, is difficult to form for example by extrusion molding.

Various different known solutions are disclosed in documents EP2305591A1, EP1886796A1, US4395298A, EP1886794A1 and DE102005044988A1.

### Brief description of the invention

The object of the invention is to introduce an improved method for manufacturing a rope. The object of the invention is also to introduce an improved rope and an improved elevator. The object of the invention is, inter alia, to solve previously described drawbacks of known solutions and problems discussed later in the description of the invention. Embodiments are presented where structural parts of the rope can each be manufactured with optimal process for the part in question. Furthermore, integration of structural parts to form part of the rope can be performed so that their final shape is easy to control. Embodiments are presented where, inter alia, the position of the rope components relative to each other can be controlled accurately.

It is brought forward a new method for manufacturing a rope. The method comprises a step where at least one pre-manufactured elongated load bearing member for the rope and at least one pre-manufactured elongated surface part for the rope are provided, and thereafter a step where said at least one pre-manufactured elongated load bearing member and said at least one pre-manufactured elongated surface part are guided together such that their sides lean against each other, and a step where said at least one pre-manufactured elongated load bearing member and said at least one pre-manufactured elongated surface part are fixed to each other. Thus, the rope can be manufactured simply and with a fast process. Because the load bearing members and the surface part are pre-manufactured, their integration to form together an integral structure is accurate, simple and quick. Both the load bearing members and the surface part can be pre-manufactured parts having an optimal structure with a process of optimal speed and type for it. Thus, their manufacturing processes don't affect each other. Furthermore, they need not be completely formed during the fixing step, so the process does not depend on how complicated internal structures of the parts are, nor on the particular shape of them. Therefore, for example discontinuous surface shapes can be formed earlier and need not be formed during the fixing process. Said at least one load bearing member is made of composite material comprising reinforcing fibers embedded in polymeric matrix, and each of said at least one load bearing member has width larger than thickness thereof, the width/thickness ratio(s) of each of said at least one load bearing member being at least 2, and each of said at least one surface part comprises thermoplastic material at least on its side facing said at least one load bearing member, or vice versa, and in the method said at least one elongated surface part and said at least one load bearing member are fixed to each other by ultrasound heating and subsequently cooling said thermoplastic material while said at least one elongated surface part and said at least one elongated load bearing member are together. With this method, the heating effect can be focused locally on the desired material portion. In particular, the heating can in this way be focused on material portion that is not accessible by other means of heating. This heating step enables the fixing with very little changes in the parts being fixed. Thereby, the relative positioning nor the properties of the pre-manufactured parts are not harmfully changed during the fixing step. The high width/thickness ratio facilitates, inter alia, the fixing method by ultrasound, because the heating process is easier to control when the heated target is wide and at a constant distance from the heater.

In a preferred embodiment each of said at least one surface part comprises thermoplastic material at least on its side facing said at least one load bearing member, or vice versa, and said at least one elongated surface part and said at least one load bearing member are fixed to each other by heating and subsequently cooling said thermoplastic material. In this way, said pre-manufactured parts can be fixed to each other simply and without considerably reshaping the parts. Also, the fixing can be performed without adding fixing substances. Preferably at least the cooling is carried out while said at least one elongated surface part and said at least one load bearing member are together in the defined manner.

In a preferred embodiment each of said at least one surface part comprises thermoplastic material at least on its side facing said at least one load bearing member, or vice versa, and said at least one elongated surface part and said at least one load bearing member are fixed to each other by both heating and subsequently cooling said thermoplastic material while said at least one elongated surface part and said at least one load bearing member are together.

In a preferred embodiment said at least one elongated load bearing member and the elongated surface part are guided together each being in solid state. This facilitates their handling and positioning accurately relative to each other.

In a preferred embodiment the thermoplastic material on the side of said at least one surface part facing said at least one load bearing member, or vice versa, is heated such that it melts. Melting ensures firm bonding between the materials of the parts being fixed when the melted material is subsequently cooled and thereby solidified.

In a preferred embodiment the thermoplastic material on the side of said at least one surface part facing said at least one load bearing member, or vice versa, is heated such that only that minor portion of the part in question melts.

In a preferred embodiment the heating is performed after the at least one elongated load bearing member and the elongated surface part have been guided together in the defined manner.

In a preferred embodiment the thermoplastic material is thermoplastic polymeric material.

In a preferred embodiment the thermoplastic material is made of, or at least comprises, thermoplastic polyurethane.

In a preferred embodiment the rope is a hoisting rope of an elevator suitable alone or together with corresponding ropes to suspend an elevator car.

In a preferred embodiment the heating is performed through said at least one load bearing member. The heater is then positioned on opposite side of the load bearing members than the heated surface part material.

In a preferred embodiment the heating is performed by emitting ultrasound through said at least one load bearing member.

In a preferred embodiment the surface part has a contoured side and said at least one elongated load bearing member and the elongated surface part are guided together such that a side opposite the contoured side is against the side(s) of the at least one load bearing member.

In a preferred embodiment each of said at least one load bearing member has width larger than thickness thereof as measured in width-direction of the rope.

In a preferred embodiment at least one load bearing member comprises plurality of load bearing members which are fixed on the surface part adjacently on a same plane.

In a preferred embodiment said rope being manufactured is a rope in the form of a belt. Thus, the rope has width that is larger than a thickness thereof in a transverse direction of the rope.

The reinforcing fibers preferably comprise carbon fibers or glass fibers or polymer fibers, such as Aramid fibers or polybenzoxazole fibers or UHMWPE fibers or corresponding. These are all light-weighted fibers and thus a light-weighted rope can be manufactured. The fibers are most preferably carbon fibers, as in this way the load bearing member can be formed to have great tensile strength. The matrix preferably comprises thermosetting polymer. Most preferably, the matrix comprises epoxy, which provides support for individual fibers distributed in the matrix.

In a preferred embodiment the reinforcing fibers are essentially untwisted in relation to each other. The rope is thus particularly well suitable for elevator use. With this structure, the load bearing member as well as the inner structure of the load bearing member behaves well under tension and in particular when the rope is bent. This structure provides high tensile stiffness and reduces internal wear of the rope.

In a preferred embodiment the reinforcing fibers are non-metallic. Thereby, the rope can be formed light-weighted.

In a preferred embodiment the load bearing member(s) of the rope cover(s) majority, preferably 70% or over, more preferably 75% or over, most preferably 80% or over, of the width of the rope.

In a preferred embodiment said the width/thickness ratio(s) of said load bearing member(s) is/are at least 3. In case the rope comprises only on load bearing member, it is preferable that the width/thickness ratio(s) of said load bearing member(s) is at least 5, or more.

In a preferred embodiment the polymer matrix is preferably so hard that its module of elasticity (E) is over 2 GPa, most preferably over 2.5 GPa. In this case the module of elasticity (E) is preferably in the range 2.5-10 GPa, most preferably in the range 2.5-3.5 GPa.

In a preferred embodiment over 50% of the cross-sectional square area of the load-bearing member consists of said reinforcing fiber.

In a preferred embodiment said contoured lateral side is a toothed lateral side.

In a preferred embodiment said contoured lateral side is a roughened lateral side.

In a preferred embodiment said surface part is elastomeric.

In a preferred embodiment the load bearing member has a fabric cover layer. The fabric facilitates adhesion of the surface part on the load bearing member as fabric forms a base on which the melted surface part material can firmly adhere.

In a preferred embodiment the load bearing member has a polymeric cover layer. The polymeric cover layer is in that case preferably thermoplastic outer material layer formed on the load bearing member during the pre-manufacturing of the load bearing member. Thereby, the adhesion between the parts can be further improved. Also, in this way the fixing may be arranged to include heating and subsequent cooling of thermoplastic material of the load bearing member, either in addition to or as an alternative to heating and subsequent cooling of thermoplastic material of the surface part.

In a preferred embodiment the surface part for the rope is a non-bearing part for the rope.

In a preferred embodiment the surface part comprises bottom groove(s) in which the load bearing member(s) are guided and fixed in the defined manner.

It is also brought forward a new rope, which is obtained by the method as defined above.

It is also brought forward a new elevator comprising an elevator car and a roping connected to the elevator car, the roping comprising one or more rope, which is obtained by the method as defined above. Preferably, the roping is a suspension roping suspending the elevator car. Preferably, the roping connects the car and a counterweight of the elevator. Preferably, the roping passes around a sheave mounted above the car and counterweight and suspends the car and counterweight on opposite sides of the sheave. The elevator is preferably, but not necessarily, installed inside a building. The car is preferably traveling vertically. The car is preferably arranged to serve two or more landings. The car preferably responds to calls from landing and/or destination commands from inside the car so as to serve persons on the landing(s) and/or inside the elevator car. Preferably, the car has an interior space suitable for receiving a passenger or passengers.

### Brief description of the drawings

In the following, the present invention will be described in more detail by way of example and with reference to the attached drawings, in which
Figure 1 illustrates a step of the method according to a first embodiment where load bearing members for the rope and a surface part for the rope are guided together and fixed together by heating.
Figure 2 illustrates a cross-section A-A in Figure 1.
Figure 3 illustrates a step following the step of Figure 1 where a second surface part for the rope and the load bearing members for the rope are guided together and fixed to each other by heating.
Figure 4 illustrates a step of the method according to a second embodiment where load bearing members for the rope and a surface part for the rope are guided together and to and fixed to each other by heating.
Figure 5 illustrates a cross-section A-A in Figure 4.
Figure 6 illustrates a step following the step of Figure 4 where groove walls of the surface part for the rope are bent against the load bearing members.
Figure 7 illustrates a step following the step of Figure 6 where groove walls bent against the load bearing members are fixed to each other by heating.
Figure 8a illustrates the preferred internal structure for the load bearing member.
Figure 8b illustrates three-dimensionally the preferred structure for the load bearing member.
Figures 9a-9f illustrate alternative structures for the rope manufactured with the method.
Figure 10 illustrates an alternative structure for the load bearing member.
Figure 11 illustrates an alternative structure for the rope and the load bearing members.
Figure 12 illustrates an elevator with a roping comprising a rope obtained with the method.

### Detailed description

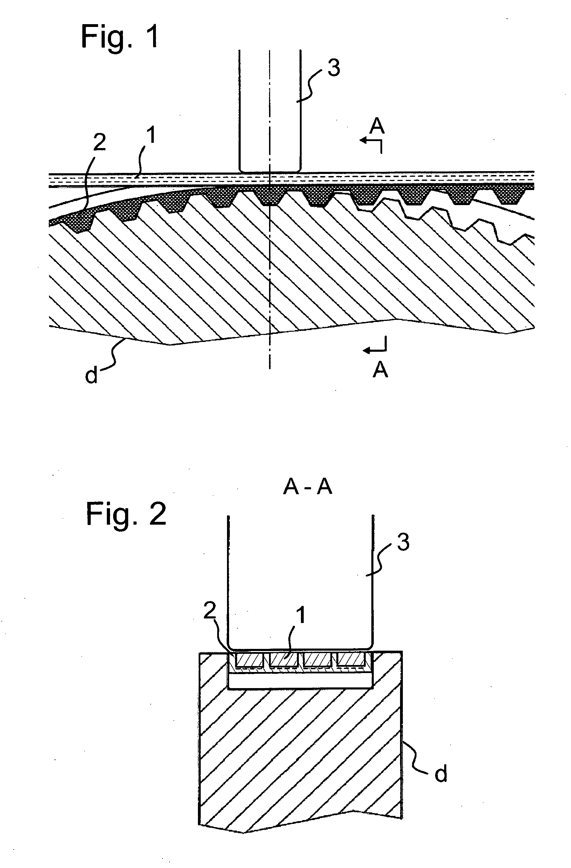

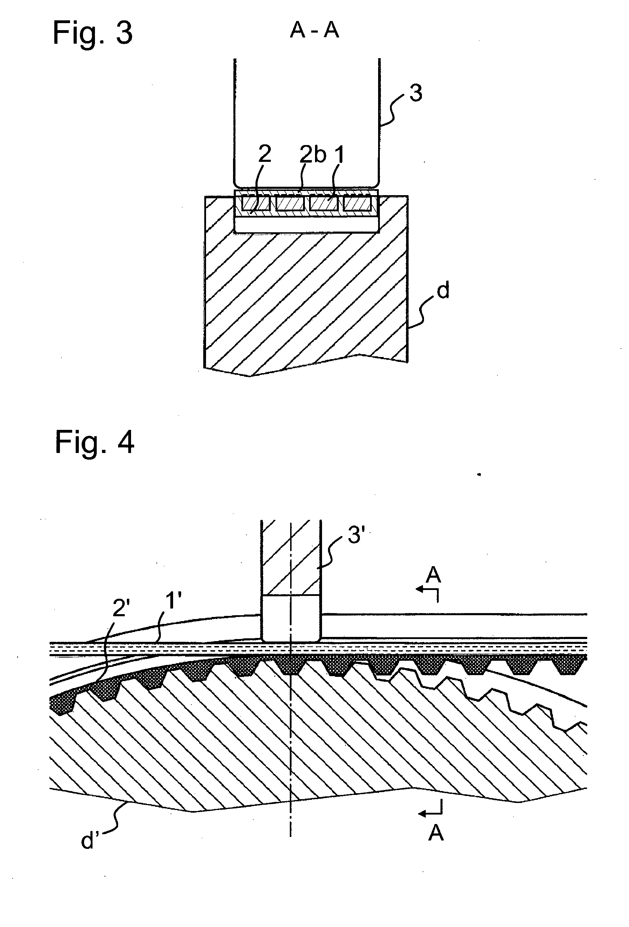

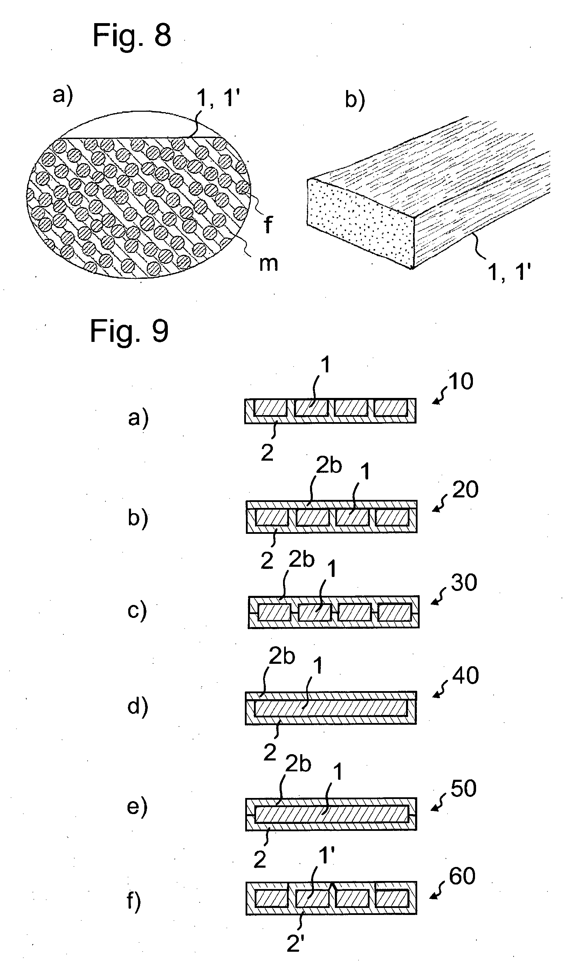

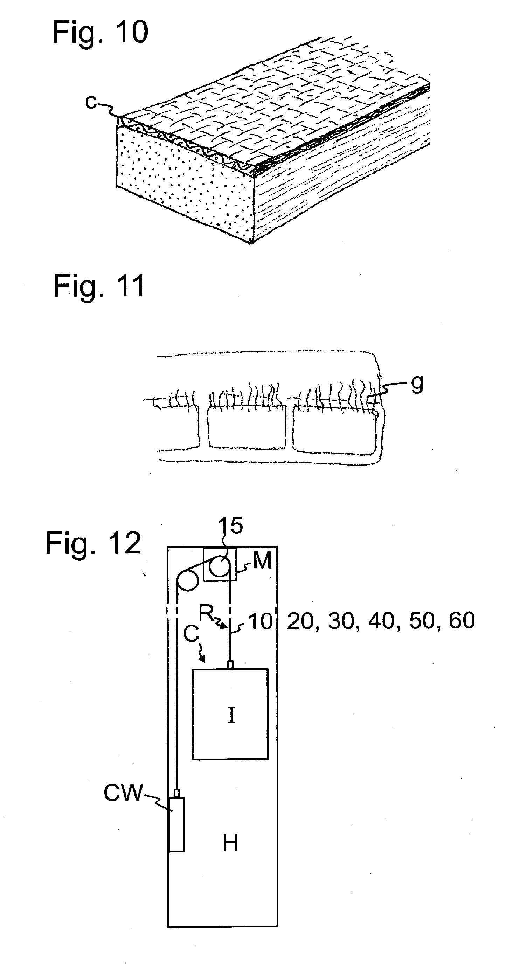

Figures 1 and 4 each illustrates an embodiment of a fixing step of a method for manufacturing a rope. In these Figures pre-manufactured elongated load bearing members 1, 1' for the rope as well as a pre-manufactured elongated surface part 2, 2' for the rope, which have earlier been pre-manufactured separately from each other, are guided together such that their lateral sides are in contact and lean against each other. After this they are fixed to each other. Thus, a rope 10, 20, 30, 40, 50, 60, as illustrated in Figures 9 and 12 for instance, can be manufactured simply and with a fast process. Because the load bearing members 1, 1' and the surface part 2, 2' are pre-manufactured, their integration to form together an integral structure is accurate, simple and quick. Both the load bearing members and the surface part have been pre-manufactured to have an optimal structure with a process of optimal speed and type for it. Thus, their manufacturing processes don't affect each other. Furthermore, they need not be completely formed during the fixing, so the process does not depend on how complicated internal structures of the parts are, nor on the particular shape of them. Therefore, for example discontinuous surface shapes can be formed earlier and need not be formed during the fixing process. In the embodiments of Figures 1 and 4, several load bearing members 2, 2' (in this case four) are fixed to a surface part 1, 1', but alternatively any other number, such as only one load bearing member, could be fixed to the surface part in a corresponding way. Respectively, any other number of surface parts could be fixed to the load bearing member(s). The process allows fixing together load bearing member(s) and surface part(s) which are of different materials without affecting their structures considerably. In the preferred embodiments, the surface part 2, 2' fixed to the load bearing members 1, 1' of the rope is a non-bearing part of the rope 10, 20, 30, 40, 50, 60 being manufactured. Said load bearing members 1, 1' and the surface part(s) each form an integral part of the rope 10, 20, 30, 40, 50, 60 and continues unbroken throughout the length of the rope 10, 20, 30, 40, 50, 60 manufactured with the method.

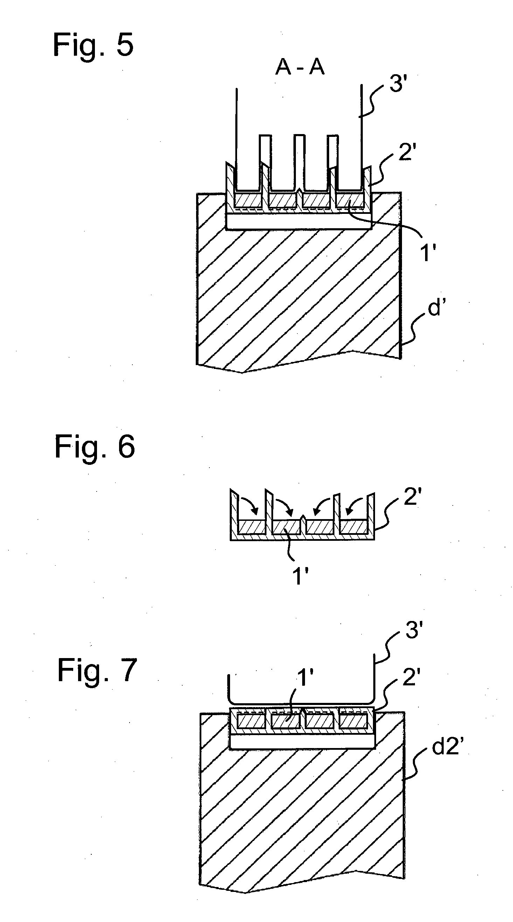

In the preferred embodiments as illustrated in Figures 1 and 5 the surface part 2,2' comprises thermoplastic material at least on its side facing the load bearing member. Thus, the thermoplastic material of the surface part 2,2' leans against the load bearing members 1,1' when the surface part 2,2' leans against the load bearing members 1,1'. In the preferred embodiments, the surface parts 2, 2' are made completely of this thermoplastic material, but alternatively they could be made of different materials, in which case at least the side facing the load bearing member 1, 1' should comprise thermoplastic material. After the elongated surface part 2 and said load bearing members 1 are guided together, they are fixed to each other by heating and subsequently cooling said thermoplastic material while the elongated surface part and the load bearing member are together such that their lateral sides are in contact and lean against each other. In the preferred embodiments, the heating is performed by ultrasound heating the thermoplastic material with an ultrasound heater 3,3'.

The cooling is performed by exposing the now integral entity formed by the surface part 2,2' and the load bearing members 1,1' to ambient air, or alternatively by a special cooling device. For the air cooling, the integral entity formed by the surface part 2,2' and the load bearing members 1,1' are guided in the embodiments of Figure 1 and 4 towards right in ambient air.

In the preferred embodiments of Figures 1 and 4, the heater 3,3' heats the thermoplastic material such that it melts. Thus, a strong adhesive bond between the parts can be achieved as the thermoplastic material will adhere on the load bearing members 1,1' firmly when it cools down. The heating being carried out by the ultrasound heater makes it possible to focus the heating effect on only the minor portions of the surface part that need to be locally melted, i.e. the thermoplastic material on the side of the surface part facing the load bearing member 1,1' and which is in contact with the load bearing member 1,1'. With this kind of locak heating, the opposite side of the surface part, which side will form the outer surface of the rope, is not heated (at least not as much as the opposite side) and thereby maintains its outer shape and inner structure. Thereby, these properties are not adversely affected by the local heating. Also, the integral entity formed by the surface part 2,2' and the load bearing members 1,1' is much easier to handle and guide forward in the process when the outer surface of the surface part 2,2' is not sensitive to touch. The locally heated portion of the thermoplastic material is illustrated in Figures 2, 3, 5 and 7 in dashed line.

The thermoplastic material is preferably thermoplastic polymeric material. There are numerous polymers that can be used. The thermoplastic polymeric material is most preferably thermoplastic polyurethane, which can be effectively heated with ultrasound and will adhere firmly to the load bearing member 2,2'. It is also elastomeric and is thereby well suitable for being used in a rope of an elevator. Polyurethane has good wear resistance, elasticity and friction properties well suitable for ropes in elevator use. Particularly, the rope being manufactured is a hoisting rope of an elevator suitable alone or together with corresponding ropes to suspend the elevator car. Thus, the car forms the load that the load bearing members of the ropes manufactured with the method are suitable to bear without braking.

As illustrated in Figures 1,2,4 and 5 the heating is performed through the load bearing member(s) 1,1' with the heater 3, more particularly with an ultrasound emitter positioned on a side of the load bearing members 2,2' which is opposite the side on which the surface part material to be heated is positioned. It is also possible to emit the ultrasound with an ultrasound emitter without emitting it through the load bearing members but through the surface part. This will be illustrated and described later with reference to Figures 3 and 7.

The embodiments of the method suit well for forming a rope with contoured surface, because the surface can be shaped with a process separate from the fixing process. However, the method suits well also for forming a rope with smooth surface. In the preferred embodiments, the surface part 2, 2' has a contoured side and said elongated load bearing members 1, 1' and the elongated surface part 2, 2' are guided together such that a side opposite the contoured side is against the sides of the load bearing members 1, 1'.

In the preferred embodiment, each of said load bearing members 1, 1' has a width larger than thickness thereof as measured in width-direction of the rope. With this kind of load bearing members 1, 1' firm adhesive bonding is of utmost importance, because mechanical locking is not available as much as with load bearing members with different cross-sections. This shape of the load bearing members 1, 1' brings the advantage that it makes possible to use a heating process, which is simple and easy to control. In particular, when the heating is carried out with ultrasound, the heated portion of the surface part 2, 2' can be accurately controlled and only very thin layer can be locally melted. Furthermore, the plurality of load bearing members 2, 2' are fixed to the surface part 1, 1' adjacently on a same plane. Thus, there are plural points where surface part material leans against the plural load bearing members, at which plural points the surface part material can be heated simultaneously with simple arrangement. The heater 3 can, as illustrated, have a heating head for emitting ultrasound with heating effect focused on a predefined distance. The distance equals the distance between the thermoplastic material to be heated and the heater head. In case of the adjacently and on the same plane positioned load bearing members, said distance can be the same at the point of each load bearing member 1, 1' and with the whole width of each load bearing member 1, 1'.

In the preferred embodiments, the surface part 2, 2' comprises groove(s) in which the load bearing members 1, 1' are guided and fixed to the groove bottoms in the earlier defined manner. If the load bearing members are wished to be closed inside the rope surrounded by surface part material, this can be done in alternative ways. In the embodiment as illustrated in Figure 1, after the load bearing members 1, 1' are guided and fixed in the earlier defined manner, a second pre-manufactured elongated surface part 2b in addition to aforementioned surface part 2 is guided to lean on the load bearing members 1 on side of the load bearing member(s) opposite the side on which the aforementioned surface part 2 is. This second surface part 2b is then fixed on the load bearing members 1. It preferably has the same material characteristics as earlier mentioned for the surface part 2. The fixing is preferably also performed in the corresponding way as mentioned for the surface part 2. Additionally, the second surface part 2b and the aforementioned surface part 2 can be fixed also to each other in their points contacting each other. Then the heating can be focused on the thermoplastic material of one or both of these two surface parts. The grooves have in this embodiment such depth that their sides are level with the load bearing members 2. Thus, the second surface part reaches into contact with the load bearing members 1 easily. In the embodiment as illustrated in Figure 4, the grooves are deeper than the thickness of the load bearing members 1'. Figure 5 illustrates the fixing of the load bearing members 1' to the groove bottoms of the surface part 2'. For this purpose, a heater 3' with multiple heating heads is used, such that the groove walls extend between adjacent heating heads of the heater 3. Thus, the heating heads can reach very close to the substance that is being heated. After the load bearing members 1' are guided in the grooves and fixed in the earlier defined manner, side walls of the grooves, which side walls form part of the surface part 2', are bent against the load bearing members 1' which are set on the bottom of the grooves. This step is illustrated in Figure 6. The side walls bent against the load bearing members 1' are then fixed to the load bearing members 1'.

The bent groove walls comprise thermoplastic material on the side facing the load bearing member 1'. The bent groove walls are now fixed to the load bearing members 1' in the same way as the load bearing members 1' were fixed on the bottom of the groove, i.e. by ultrasound heating thermoplastic material of the groove walls, which is on the side facing the load bearing member 1' and subsequently cooling said thermoplastic material while the walls lean against the load bearing members 1'.

The load bearing member(s) 1, 1' is/are preferably made of composite material comprising reinforcing fibers f embedded in polymeric matrix m. The preferred inner structure of the load bearing member 1, 1' is illustrated in Figure 8a. Figure 8b illustrates a load bearing member 1, 1' when it is made of composite material. The reinforcing fibers f are preferably carbon fibers as will be later explained. However, the reinforcing fibers f could alternatively be glass fibers or any kind of polymer fibers, such as Aramid fibers or polybenzoxazole fibers or UHMWPE fibers or corresponding, as these all fibers are light-weighted and suitable still to be used for suspending high loads, such as in a hoisting rope of and elevator, due to their good strength. In any case, for the purpose of making the rope light, reinforcing fibers f are preferably non-metallic. The reinforcing fibers f are preferably essentially untwisted in relation to each other. Thus, the load bearing member 1, 1' can have a high tensile stiffness and good behavior in bending as will be later explained. The load bearing members are preferably more specifically as described in WO2009090299 A1. The preferred inner structure of the load bearing member 1, 1' is more specifically as follows. The load bearing member 1, 1' as well as its fibers f are longitudinal to the rope, and untwisted as far as possible. For this reason the rope retains its structure when it is bent, and thereby suits well for elevator use where bending is unavoidable. The load bearing member 1, 1' as well as its Individual fibers f are thus oriented parallel with the longitudinal direction of the rope. Thereby, the load bearing member 1, 1' as well as its Individual fibers f are aligned with the force when the rope is pulled, which ensures that the structure provides high tensile stiffness. Individual reinforcing fibers f are bound into a uniform load bearing member with the polymer matrix m. Thus, each load bearing member 1, 1' is one solid elongated rod-like piece. The reinforcing fibers f are preferably long continuous fibers in the longitudinal direction of the rope 10, 20, 30, 40, 50, 60. The fibers f preferably continue for the distance of the whole length of the load bearing member 1, 1' as well as for the distance of the whole length of the rope 10, 20, 30, 40, 50, 60. Preferably as many fibers f as possible, most preferably essentially all the fibers f of the load bearing member 1, 1' are oriented in longitudinal direction of the rope in untwisted manner in relation to each other. Thus the structure of the load bearing member 1, 1' can be made to continue the same as far as possible in terms of its cross-section for the whole length of the rope. The reinforcing fibers f are preferably distributed in the aforementioned load bearing member 1, 1' as evenly as possible, so that the load bearing member 1, 1' would be as homogeneous as possible in the transverse direction of the rope. An advantage of the structure presented is that the matrix m surrounding the reinforcing fibers f keeps the interpositioning of the reinforcing fibers f essentially unchanged. It equalizes with its slight elasticity the distribution of a force exerted on the fibers, reduces fiber-fiber contacts and internal wear of the rope, thus improving the service life of the rope. The reinforcing fibers being carbon fibers, a good tensile rigidity and a light structure and good thermal properties, among other things, are achieved. They possess good strength properties and rigidity properties with small cross sectional area, thus facilitating space efficiency of a roping with certain strength or rigidity requirements. They also tolerate high temperatures, which reduces the risk of ignition. Good thermal conductivity also assists the onward transfer of heat due to friction, among other things, and thus reduces the accumulation of heat in the parts of the rope. The composite matrix m, into which the individual fibers f are distributed as evenly as possible, is most preferably of epoxy resin, which has good adhesiveness to the reinforcements and which is strong to behave advantageously with carbon fiber. Alternatively, e.g. polyester or vinyl ester can be used, but also other alternative materials exist. Figure 8 presents a partial cross-section of the surface structure of the load bearing member 1, 1' as viewed in the longitudinal direction of the rope presented inside the circle in the figure, according to which cross-section the reinforcing fibers f of the load bearing members 1, 1' are preferably organized in the polymer matrix m. Figure 8 presents also how the individual reinforcing fibers f are essentially evenly distributed in the polymer matrix m, which surrounds the fibers and which is fixed to the fibers f. The polymer matrix m fills the areas between individual reinforcing fibers f and binds essentially all the reinforcing fibers f that are inside the matrix m to each other as a uniform solid substance. In this case abrasive movement between the reinforcing fibers f and abrasive movement between the reinforcing fibers f and the matrix m are essentially prevented. A chemical bond exists between, preferably all, the individual reinforcing fibers f and the matrix m, one advantage of which is uniformity of the structure. To strengthen the chemical bond, there can be, but not necessarily, a coating (not presented) of the actual fibers between the reinforcing fibers and the polymer matrix m. The polymer matrix m is of the kind described elsewhere in this application and can thus comprise additives for fine-tuning the properties of the matrix as an addition to the base polymer. The polymer matrix m is preferably of a hard non-elastomer. The reinforcing fibers f being in the polymer matrix means here that in the invention the individual reinforcing fibers are bound to each other with a polymer matrix m e.g. in the manufacturing phase by embedding them together in the molten material of the polymer matrix. In this case the gaps of individual reinforcing fibers bound to each other with the polymer matrix comprise the polymer of the matrix. In this way a great number of reinforcing fibers bound to each other in the longitudinal direction of the rope are distributed in the polymer matrix. The reinforcing fibers are preferably distributed essentially evenly in the polymer matrix such that the load bearing member is as homogeneous as possible when viewed in the direction of the cross-section of the rope. In other words, the fiber density in the cross-section of the load bearing member does not therefore vary greatly. The reinforcing fibers f together with the matrix m form a uniform load bearing member, inside which abrasive relative movement does not occur when the rope is bent. The individual reinforcing fibers of the load bearing member 1, 1' are mainly surrounded with polymer matrix m, but random fiber-fiber contacts can occur because controlling the position of the fibers in relation to each other in their simultaneous impregnation with polymer is difficult, and on the other hand, perfect elimination of random fiber-fiber contacts is not necessary from the viewpoint of the functioning of the invention. If, however, it is desired to reduce their random occurrence, the individual reinforcing fibers f can be pre-coated such that a polymer coating is around them already before the binding of individual reinforcing fibers to each other. In the invention the individual reinforcing fibers of the load bearing member can comprise material of the polymer matrix around them such that the polymer matrix is immediately against the reinforcing fiber but alternatively a thin coating, e.g. a primer arranged on the surface of the reinforcing fiber in the manufacturing phase to improve chemical adhesion to the matrix material, can be in between. Individual reinforcing fibers are distributed evenly in the load bearing member 1, 1' such that the gaps of individual reinforcing fibers f are filled with the polymer of the matrix m. Most preferably the majority, preferably essentially all of the gaps of the individual reinforcing fibers f in the load bearing member 1, 1' are filled with the polymer of the matrix m. As above mentioned, the matrix m of the load bearing member 1, 1' is most preferably hard in its material properties. A hard matrix m helps to support the reinforcing fibers f, especially when the rope bends, preventing buckling of the reinforcing fibers f of the bent rope, because the hard material supports the fibers f. To reduce the buckling and to facilitate a small bending radius of the rope, among other things, it is therefore preferred that the polymer matrix is hard, and in particular non-elastomeric. The most preferred materials are epoxy resin, polyester, phenolic plastic or vinyl ester. The polymer matrix is preferably so hard that its module of elasticity (E) is over 2 GPa, most preferably over 2.5 GPa. In this case the module of elasticity (E) is preferably in the range 2.5-10 GPa, most preferably in the range 2.5-3.5 GPa. Preferably over 50% of the surface area of the cross-section of the load bearing member is of the aforementioned reinforcing fiber, preferably such that 50%-80% is of the aforementioned reinforcing fiber, more preferably such that 55%-70% is of the aforementioned reinforcing fiber, and essentially all the remaining surface area is of polymer matrix. Most preferably such that approx. 60% of the surface area is of reinforcing fiber and approx. 40% is of matrix material (preferably epoxy). In this way a good longitudinal strength of the rope is achieved. Epoxy is also well suitable for a process where the load bearing member 1, 1' is fixed to the surface part 2, 2' by heating as it is a thermosetting material and the heating occurring later (after the thermosetting epoxy has already once been solidified during the pre-manufacturing of the load bearing member) does not affect it adversely.

Figures 10 and 11 illustrates alternative structures for the load bearing member. These alternatives can be used to improve adhesion between the surface part and the load bearing member, and utilized in the other embodiments. As illustrated in Figure 10, the load bearing member may have a fabric cover layer fixed on the composite material which comprises reinforcing fibers f in polymer matrix m as above explained. Otherwise, the structure is as disclosed in Figure 8b. The fabric facilitates adhesion of the surface part on the load bearing member as fabric forms a base on which the melted surface part material can firmly adhere. Figure 11 on the other hand, illustrates an alternative where short fibers have been embedded in the composite material of the load bearing member in addition to the aforementioned reinforcing fibers f, which short fibers g have ends protruding outwards from the composite material towards the surface part. During the fixing, the ends of these short fibers g protruding outwards from the composite material have been embedded in the melted thermoplastic material of the surface part.

In this application, the term load bearing member of a rope refers to the part that is elongated in the longitudinal direction of the rope, and which part is able to bear without breaking a significant part of the load exerted on the rope in question in the longitudinal direction of the rope. The aforementioned load exerted on the rope causes tension on the load bearing member in the longitudinal direction of the load bearing member, which tension can be transmitted inside the load bearing member in question all the length of the load bearing member, e.g. from one end of the load bearing member to the other end of it. The surface part, on the other hand, is in the preferred embodiments a non-bearing part of the rope. Thereby, the tension caused by the load exerted on the rope in the longitudinal direction of the rope is not transmitted inside the surface part all the length of it. For this purpose, the module of elasticity (E) of the load bearing part(s) is/are substantially greater than the module of elasticity (E) of the surface part(s). In the application the term pre-manufactured surface part or pre-manufactured load bearing member means that the surface part or load bearing member in question has previously been formed to have a constant shape and a solid structure.

As presented in the figures, the rope 10, 20, 30, 40, 50, 60 being manufactured is preferably a rope in the form of a belt. This makes it well suitable for elevator use. Thus, the rope 10, 20, 30, 40, 50, 60 has width that is substantially larger than a thickness thereof in a transverse direction of the rope. So as to enable turning radius well suitable for elevator use, it is preferable that the width/thickness ratio of the rope is at least 2 or more, preferably at least 4, even more preferably at least 5 or more. Figure 9 illustrates alternative cross-sections of a rope 10, 20, 30, 40, 50, 60 formed with the method. The bottom side of each rope could comprise a shape as described earlier, but for the sake of clarity, this is not illustrated in Figure 9. In particular, any of the ropes in the Figures 9a-9f may comprise teeth protruding downwards in the Figure or ribs protruding downwards in the Figure and defining grooves between them or a roughened surface facing downwards in the Figure. So as to enable turning radius well suitable for elevator use, it is preferable that the width/thickness ratio(s) of said force transmission part(s) is/are at least 2, preferably at least 3 or more. If the rope is manufactured to contain only one load bearing member, then it is preferable that the ratio is 5 or more. The high ratio also facilitates the fixing method by ultrasound, because the heating process is easier to control when the heated target is wide and at a constant distance from the heater. All the load bearing members 1, 1' of the rope 10, 20, 30, 40, 50, 60 (irrespective whether there is only one or more of them in the rope 10, 20, 30, 40, 50, 60) cover together majority, preferably 70% or over, more preferably 75% or over, most preferably 80% or over, of the width of the rope. Thus, the width of the rope 10, 20, 30, 40, 50, 60 is effectively utilized for the function of load bearing.

The surface part(s) and the load bearing member(s) are preferably provided by unwinding pre-manufactured surface part(s) and the load bearing member(s) continuously from reels on which they are stored after their manufacturing (not showed). Alternatively, the process could be made continuous. In the preferred embodiments, the surface part and the load bearing member(s) are moved in their longitudinal direction and guided to be together leaning against each other. In the preferred embodiments, the surface part and the load bearing member(s) are guided together on the rim of a diverting wheel d, d'. Thus, their uniting can be easily controlled. In particular, the surface part is guided on a rim of a diverting wheel and thereafter to turn around a diverting wheel its side (in the illustrated case the contoured side) against the diverting wheel and threreafter the load bearing member(s) is/are guided on a lateral side of the surface part which is opposite the aforementioned (contoured) side. In the method the surface part and the load bearing member(s) are guided to pass against each other via a heating zone for carrying out said heating. This heating zone is in the preferred embodiments as illustrated at the point of a diverting wheel. The entity formed by the surface part and the load bearing member(s) leaning against each other runs between a heater 3, 3' and the diverting wheel. For the purpose of facilitating the heating, the entity formed by the surface part and the load bearing member(s) leaning against each other leans against a diverting wheel positioned on one side of the surface part and the load bearing member(s) leaning against each other and the heater 3, 3' is positioned on the opposite side. The thermoplastic material is thus heated while the entity formed by the surface part and the load bearing member(s) leaning against each other is against the rim of the diverting wheel.

In the preferred embodiments, the surface part 2, 2' and 2b comprises thermoplastic material at least on its side facing the load bearing member, but this could alternatively be vice versa, such that the load bearing member comprises thermoplastic material at least on its side facing the surface part and said elongated surface part and said at least one load bearing member are fixed to each other by heating and subsequently cooling said thermoplastic material while the elongated surface part and the load bearing member are together. Also in this case the heating is preferably performed by ultrasound heating. In this case, for the purpose of fixing by heating the load bearing member, the load bearing member needs to have a thermoplastic outer material layer, which can be formed on it during the pre-manufacturing of the load bearing member. A very firm adherence can be achieved with a yet another alternative, where both the load bearing member and the surface part comprise thermoplastic material on their sides facing each other. In this case, both of these would be heated as earlier described.

With the method, composite material can be advantageously provided with a firmly adhered surface part. The method, however, can also be used with load bearing members of materials different from what is disclosed herein.

As above describe, ultrasound heating is the most preferable method of heating the thermoplastic material. There are commercially available ultrasound heaters suitable for the heating as described. The ultrasound heater may be in the form of a so called ultrasonic welder. Frequencies used in ultrasonic welding of thermoplastics are usually between 15 and 70 kHz, such as the common frequencies 15 kHz, 20 kHz, 30 kHz, 35 kHz, 40 kHz and 70 kHz. It is to be understood that in the broadest sense it is not necessary that the heating is performed by ultrasound heating. Optionally the heating could be performed by any other means, such as by blowing hot air on the surface part and/or the load bearing member or by emitting infrared radiation on the surface part and/or the load bearing member. It is to be understood that in the broadest sense it is also possible that the fixing is performed with other kind of process than with heating. For example, the fixing can be performed by gluing the surface part(s) and the load bearing member(s) together.

Figure 12 illustrates an elevator comprising an elevator car C traveling in a hoistway H, and a roping R connected to the elevator car, the roping R comprising one or more rope 10, 20, 30, 40, 50, 60 each of which is obtained by the method as defined above. The roping R is a suspension roping suspending the elevator car C. The elevator is particularly an elevator with a counterweight CW, and the rope(s) 10, 20, 30, 40, 50, 60 of the roping connect(s) the car C and a counterweight CW. The roping R passes around a sheave 15 mounted above the car C and counterweight CW and suspends the car C and counterweight CW on opposite sides of the sheave 15. The elevator further comprises a motor-drive M for moving the roping R. The elevator is preferably, but not necessarily, installed inside a building. The car is arranged to serve two or more landings (not shown). The car C preferably responds to calls from landing and/or destination commands from inside the car C so as to serve persons on the landing(s) and/or inside the elevator car. The car C has an interior space I suitable for receiving a passenger or passengers.

It is to be understood that the above description and the accompanying figures are only intended to illustrate the present invention. It will be apparent to a person skilled in the art that the inventive concept can be implemented in various ways. The invention and its embodiments are not limited to the examples described above but may vary within the scope of the claims.

## Claims

1. Method for manufacturing a rope (10, 20, 30, 40, 50, 60), the method comprising the following steps
at least one pre-manufactured elongated load bearing member (1, 1') for the rope and at least one pre-manufactured elongated surface part (2, 2', 2b) for the rope are provided; and
said at least one pre-manufactured elongated load bearing member (1, 1') and said at least one pre-manufactured elongated surface part (2, 2', 2b) are guided together such that their sides lean against each other; and
said at least one pre-manufactured elongated load bearing member (1, 1') and said at least one pre-manufactured elongated surface part (2, 2', 2b) are fixed to each other,
**characterized in that** said at least one load bearing member (1, 1') is made of composite material comprising reinforcing fibers (f) embedded in polymeric matrix (m), and each of said at least one load bearing member (1, 1') has width larger than thickness thereof, the width/thickness ratio(s) of each of said at least one load bearing member (1, 1') being at least 2, and each of said at least one surface part (2, 2', 2b) comprises thermoplastic material at least on its side facing said at least one load bearing member (1, 1'), or vice versa, and in the method said at least one elongated surface part (2, 2', 2b) and said at least one load bearing member (1, 1') are fixed to each other by ultrasound heating and subsequently cooling said thermoplastic material while said at least one elongated surface part (2, 2', 2b) and said at least one elongated load bearing member (1, 1') are together.

2. A method according to the preceding claim, **characterized in that** each of said at least one surface part (2, 2', 2b) comprises thermoplastic material at least on its side facing said at least one load bearing member (1, 1'), or vice versa, and said at least one elongated surface part (2, 2', 2b) and said at least one elongated load bearing member (1, 1') are fixed to each other by heating and subsequently cooling said thermoplastic material.

3. A method according to any one of the preceding claims, **characterized in that** said at least one elongated load bearing member (1, 1') and said at least one elongated surface part (2, 2'. 2b) are guided together in solid state.

4. A method according to any one of the preceding claims, **characterized in that** the thermoplastic material on the side of said at least one surface part (2, 2', 2b) facing said at least one load bearing member (1, 1'), or vice versa, is heated such that it melts.

5. A method according to any one of the preceding claims, **characterized in that** the heating is performed after said at least one elongated load bearing member (1, 1') and said at least one elongated surface part (2, 2', 2b) have been guided together.

6. A method according to any one of the preceding claims, **characterized in that** the thermoplastic material comprises thermoplastic polyurethane.

7. A method according to any one of the preceding claims, **characterized in that** the matrix (m) comprises thermosetting polymer, most preferably epoxy.

8. A method according to any one of the preceding claims, **characterized in that** the heating is performed through said at least one load bearing member (1, 1') by emitting ultrasound through said at least one load bearing member (1, 1').

9. A method according to any one of the preceding claims, **characterized in that** the rope is a hoisting rope of an elevator.

10. A method according to any one of the preceding claims, **characterized in that** said at least one surface part (2, 2', 2b) has a contoured side and said at least one elongated load bearing member (1, 1') and said at least one elongated surface part (2, 2', 2b) are guided together such that a side opposite the contoured side is against the side(s) of the at least one load bearing member (1, 1').

11. A method according to any one of the preceding claims, **characterized in that** said at least one load bearing member (1, 1') comprises plurality of load bearing members (1, 1') which are fixed on said at least one surface part (2, 2', 2b) adjacently on a same plane.

12. A method according to any one of the preceding claims, **characterized in that** said rope being manufactured is a rope in the form of a belt.

13. A method according to any one of the preceding claims, **characterized in that** the surface part (2, 2', 2b) for the rope is a non-bearing part for the rope.

14. A rope (10, 20, 30, 40, 50, 60), **characterized in that** it is obtained by the process as defined in any of the preceding claims.

15. An elevator comprising an elevator car and a roping (R) connected to the elevator car, the roping (R) comprising one or more rope (10, 20, 30, 40, 50, 60) as defined in claim 14.

## Patentansprüche

1. Verfahren zur Herstellung eines Seils (10, 20, 30, 40, 50, 60), wobei das Verfahren folgende Schritte aufweist
zumindest ein vorgefertigtes längliches Tragteil (1, 1') für das Seil und zumindest ein vorgefertigtes längliches Oberflächenteil (2, 2', 2b) für das Seil werden zur Verfügung gestellt; und
das zumindest eine vorgefertigte längliche Tragteil (1, 1') und das zumindest eine vorgefertigte längliche Oberflächenteil (2, 2', 2b) werden so zusammengeführt, dass ihre Seiten aneinander anlehnen; und
das zumindest eine vorgefertigte längliche Tragteil (1, 1') und das zumindest eine vorgefertigte längliche Oberflächenteil (2, 2', 2b) werden aneinander befestigt,
**dadurch gekennzeichnet, dass** das zumindest eine Tragteil (1, 1') aus Verbundwerkstoff hergestellt wird, welcher Verstärkungsfasern (f) aufweist, die in eine Polymermatrix (m) eingebettet sind, und das zumindest eine Tragteil bzw. jedes der Tragteile (1, 1') eine Breite aufweist, die größer ist als die Dicke, das Verhältnis bzw. die Verhältnisse von Breite/Dicke des einen Tragteils bzw. jedes der Tragteile (1, 1') zumindest 2 beträgt und das Oberflächenteil bzw. jedes der Oberflächenteile (2, 2', 2b) thermoplastisches Material zumindest an seiner Seite aufweist, welche dem Tragteil bzw. den Tragteilen (1, 1') zugewandt ist, oder umgekehrt, und dass bei dem Verfahren das zumindest eine längliche Oberflächenteil (2, 2', 2b) und das zumindest eine Tragteil (1, 1') aneinander befestigt werden durch Ultraschallerhitzung und nachfolgendes Kühlen des thermoplastischen Materials, während das zumindest eine längliche Oberflächenteil (2, 2', 2b) und das zumindest eine längliche Tragteil (1, 1') zusammen sind.

2. Verfahren nach dem voranstehenden Anspruch, **dadurch gekennzeichnet, dass** das Oberflächenteil bzw. jedes der Oberflächenteile (2, 2', 2b) thermoplastisches Material zumindest auf seiner Seite aufweist, welche dem zumindest einen Tragteil (1, 1') zugewandt ist, oder umgekehrt, und dass das zumindest eine längliche Oberflächenteil (2, 2', 2b) und das zumindest eine längliche Tragteil (1, 1') aneinander durch Erhitzung und nachfolgendes Abkühlen des thermoplastischen Materials befestigt werden.

3. Verfahren nach einem der voranstehenden Ansprüche, **dadurch gekennzeichnet, dass** das zumindest eine längliche Tragteil (1, 1') und das zumindest eine längliche Oberflächenteil (2, 2', 2b) im festen Zustand zusammengeführt werden.

4. Verfahren nach einem der voranstehenden Ansprüche, **dadurch gekennzeichnet, dass** das thermoplastische Material auf der Seite des zumindest einen Oberflächenteils (2, 2', 2b), welche dem zumindest einen Tragteil (1, 1') zugewandt ist, oder umgekehrt, so erhitzt wird, dass es schmilzt.

5. Verfahren nach einem der voranstehenden Ansprüche, **dadurch gekennzeichnet, dass** die Erhitzung durchgeführt wird, nachdem das zumindest eine längliche Tragteil (1, 1') und das zumindest eine längliche Oberflächenteil (2, 2', 2b) zusammengeführt wurden.

6. Verfahren nach einem der voranstehenden Ansprüche, **dadurch gekennzeichnet, dass** das thermoplastische Material thermoplastisches Polyurethan aufweist.

7. Verfahren nach einem der voranstehenden Ansprüche, **dadurch gekennzeichnet, dass** die Matrix (m) ein wärmeaushärtendes Polymer aufweist, am bevorzugtesten Epoxidharz.

8. Verfahren nach einem der voranstehenden Ansprüche, **dadurch gekennzeichnet, dass** die Erhitzung durch das zumindest eine Tragteil (1, 1') dadurch durchgeführt wird, dass Ultraschall durch das zumindest eine Tragteil (1, 1') ausgesandt wird.

9. Verfahren nach einem der voranstehenden Ansprüche, **dadurch gekennzeichnet, dass** das Seil ein Förderseil eines Fahrstuhls ist.

10. Verfahren nach einem der voranstehenden Ansprüche, **dadurch gekennzeichnet, dass** das zumindest eine Oberflächenteil (2, 2', 2b) eine konturierte Seite aufweist, und dass das zumindest eine längliche Tragteil (1, 1') und das zumindest eine längliche Oberflächenteil (2, 2', 2b) so zusammengeführt werden, dass eine Seite entgegengesetzt zur konturierten Seite gegen die Seite des zumindest einen Tragteils (1, 1') anliegt.

11. Verfahren nach einem der voranstehenden Ansprüche, **dadurch gekennzeichnet, dass** das zumindest eine Tragteil (1, 1') mehrere Tragteile (1, 1') aufweist, die auf dem zumindest einen Oberflächenteil (2, 2', 2b) einander benachbart auf einer selben Ebene befestigt sind.

12. Verfahren nach einem der voranstehenden Ansprüche, **dadurch gekennzeichnet, dass** das Seil, welches hergestellt wird, ein Seil in Form eines Riemens ist.

13. Verfahren nach einem der voranstehenden Ansprüche, **dadurch gekennzeichnet, dass** das Oberflächenteil (2, 2', 2b) für das Seil ein nicht tragendes Teil für das Seil ist.

14. Seil (10, 20, 30, 40, 50, 60), **dadurch gekennzeichnet, dass** es durch das Verfahren erhalten wird, wie es in einem der voranstehenden Ansprüche festgelegt ist.

15. Fahrstuhl, der eine Fahrstuhlkabine und ein mit der Fahrstuhlkabine verbundenes Seil (R) aufweist, wobei das Seil (R) ein oder mehrere Seile (10, 20, 30, 40, 50, 60) gemäß Anspruch 14 aufweist.

## Revendications

1. Procédé de fabrication d'un câble (10, 20, 30, 40, 50, 60), le procédé comprenant les étapes suivantes :
au moins un organe porteur de charge (1, 1') allongé et préfabriqué, pour le câble et au moins une pièce de surface (2, 2', 2b) allongée et préfabriquée, pour le câble, sont prévues; et
ledit au moins un organe porteur de charge (1, 1') allongé et préfabriqué et ladite au moins une pièce de surface (2, 2', 2b) allongée et préfabriquée sont guidées ensemble de telle sorte que leurs côtés sont en appui les uns contre les autres; et
ledit au moins un organe porteur de charge (1, 1') allongé et préfabriqué et ladite au moins une pièce de surface (2, 2', 2b) allongée et préfabriquée sont fixés l'un à l'autre,
caractérisé en ce ledit au moins un organe porteur de charge (1, 1') est réalisé en un matériau composite comprenant des fibres de renforcement (f) noyées dans une matrice polymère (m), et en ce que chacun desdits au moins un organe porteur de charge (1, 1') a une largeur plus grande que son épaisseur, le ou les rapport(s) largeur/épaisseur de chacun desdits au moins un organe porteur de charge (1, 1') étant au moins égal à 2, et chacune parmi ladite au moins une pièce de surface (2, 2', 2b) comprend un matériau thermoplastique au moins sur son côté tourné vers ledit au moins un organe porteur de charge (1, 1'), ou vice versa, et en ce que, dans le procédé, ladite au moins une pièce de surface (2, 2', 2b) allongée et ledit au moins un organe porteur de charge (1, 1') sont fixées l'un à l'autre par échauffement par ultrasons et refroidissement subséquent dudit matériau thermoplastique pendant que ladite au moins une pièce de surface (2, 2', 2b) et ledit au moins un organe porteur de charge (1, 1') sont assemblés.

2. Un procédé selon la revendication précédente, **caractérisé par le fait que** chacune desdites au moins une pièce de surface (2, 2', 2b) comprend un matériau thermoplastique au moins sur son côté tourné vers ledit au moins un organe porteur de charge (1, 1'), ou vice versa, et ladite au moins une pièce de surface (2, 2', 2b) allongée et ledit au moins un organe porteur de charge (1, 1') allongé sont fixés l'un à l'autre par la chauffe et le refroidissement subséquent dudit matériau thermoplastique.

3. Procédé selon l'une quelconque des revendications précédentes, **caractérisé en ce que** ledit au moins un organe porteur de charge (1, 1') allongé et ladite au moins une pièce de surface (2, 2', 2b) allongée sont guidés ensemble dans un état solide.

4. Un procédé selon l'une quelconque des revendications précédentes, **caractérisé en ce que** le matériau thermoplastique sur le côté de ladite au moins une pièce de surface (2, 2', 2b) allongée tourné vers ledit au moins un organe porteur de charge (1, 1'), ou vice versa, est chauffé de telle sorte qu'il fonde.

5. Un procédé selon l'une quelconque des revendications précédentes, **caractérisé en ce que** la chauffe est effectuée après que ledit au moins un organe porteur de charge (1, 1') allongé et ladite au moins une pièce de surface (2, 2', 2b) allongée aient été guidées ensemble.

6. Un procédé selon l'une quelconque des revendications précédentes, **caractérisé en ce que** le matériau thermoplastique comprend du polyuréthane thermoplastique.

7. Un procédé selon l'une quelconque des revendications précédentes, **caractérisé en ce que** la matrice (m) comprend un polymère thermodurcissable, de préférence de l'époxy.

8. Un procédé selon l'une quelconque des revendications précédentes, **caractérisé en ce que** la chauffe est effectuée à travers ledit au moins un organe porteur de charge (1, 1') en émettant des ultrasons à travers ledit au moins un organe porteur de charge (1, 1').

9. Un procédé selon l'une quelconque des revendications précédentes, **caractérisé en ce que** le câble est un câble de levage d'un ascenseur.

10. Un procédé selon l'une quelconque des revendications précédentes, **caractérisé en ce que** ladite au moins une pièce de surface (2, 2', 2b) présente un côté profilé et ledit au moins un organe porteur de charge (1, 1') allongé et ladite au moins une pièce de surface (2, 2', 2b) allongée sont guidées ensemble de telle sorte qu'un côté opposé à la face profilée est positionné contre le côté dudit au moins un organe porteur de charge (1, 1').

11. Un procédé selon l'une quelconque des revendications précédentes, **caractérisé en ce que** ledit au moins un organe porteur de charge (1, 1') comprend plusieurs organes porteur de charge (1, 1') qui sont fixés sur ladite au moins une pièce de surface (2, 2', 2b) de manière adjacente sur un même plan.

12. Un procédé selon l'une quelconque des revendications précédentes, **caractérisé en ce que** ledit câble préfabriqué est un câble sous la forme d'une courroie.

13. Un procédé selon l'une quelconque des revendications précédentes, **caractérisé en ce que** la pièce de surface (2, 2', 2b) pour le câble est une partie non-porteuse du câble.

14. Un câble (10, 20, 30, 40, 50, 60), **caractérisé en ce qu'**il est obtenu par le procédé tel que défini dans l'une quelconque des revendications précédentes.

15. Un ascenseur comprenant une cabine d'ascenseur et un câblage (R) reliée à la cabine d'ascenseur, le câblage (R) comprenant un ou plusieurs câbles (10, 20, 30, 40, 50, 60) tels que définis dans la revendication 14.
